# EUROPEAN PATENT APPLICATION

(11) **EP 3 576 237 A1**
(43) Date of publication of application: **04.12.2019**
(21) Application number: 18745065.5
(22) Date of filing: 16.01.2018
(51) Int. Cl.: H02G 9/10, B62H 5/00

(54) **ANTI-THEFT BATTERY BENCH**

(30) Priority: 25.01.2017 ES 201730086
(71) Applicant: Martin Martin, Antonio Jose, 18008 Granada (ES)
(72) Inventor: Martin Martin, Antonio Jose, 18008 Granada (ES)
(74) Representative: Bartrina Diaz, José María
(86) International application number: PCT/ES2018/070028
(87) International publication number: WO 2018/138395

(57) **Abstract**

The Battery Anti-Theft Bench consists of a frame-like structure in metal profiling. Its measurements are adapted to the shape and dimensions of the battery or battery set which is the object of protection. There is a unit battery support to which the battery is joined together, fixed by screws from the unit battery support to the main structure as a threaded metal rod that, when passed through guides for this purpose, ties both pieces together. Finally, a metal closure as a front cover that prevents access to the security screws in order to reduce or eliminate the risk of battery theft once installed.

## Description

### PURPOSE OF THE INVENTION

The present invention relates to a frame-like structure designed to fix all types of batteries thereon, adapting its measurements to the set of batteries to be protected in order to reduce or eliminate the risk of theft.

The present invention finds its scope in the field of battery manufacture and use. It has an envisioned use in all such types of facilities, e.g.: mobile and fixed telephone stations; photovoltaic systems; automotion; marine fields, etc.

### Background of the state of the art

It is well known that many mechanical and electrical installations make use of batteries. These have an economic value in relation to their size or the problems arising from their removal or theft. As a result, many industries, such as telecommuniactions, build a redundancy cost into their operating accounts to deal with theft and the consequent need to replace their batteries.

Addressing the state of the art in the subject matter, in many cases use is made of more or less sophisticated perimeter fences, video surveillance cameras connected to alarm control units, a physical presence by guards in the enclosure, etc. The costs so incurred are not always viable or manageable, nor do they guarantee that theft will not occur.

To specifically deal with some inventions that pertain to the state of the art, in the Utility Model of the Publication No. and Title respectively ES-1142639U ELECTRIC BICYCLE BATTERY ANTI-THEFT DEVICE, an anti-theft device is described for electric bicycle batteries of the type that include a bicycle frame. In this case it is a specific application proposal related to electric bicycle batteries and cannot be extrapolated to any other types of batteries.

In the Utility Model of Publication Number and Title respectively ES1 120 305U, BATTERY ANTI-THEFT SYSTEM, a battery anti-theft system is put forward, characterized by a rectangular reinforced concrete main structure, a reinforced concrete cover that acts as a closure to the main structure, a galvanized steel bench that can accommodate up to 24 batteries, a ventilation duct and a second duct through which cables pass, functioning as a concrete chamber.

However, the "battery anti-theft bench" provides the following additional advantages over other systems present in the state of the art to ensure that the battery cannot be stolen by the usual means in these instances:
✔ Notable reduction in installation costs.
✔ Does not require changes to the existing wiring installation.
✔ Does not hinder access to the battery for maintenance activities.
✔ Replacement of batteries through independent access to each battery making up the block.
✔ Easy adaptation to existing installations; able to be mounted on the support where the batteries are usually fixed.

### EXPLANATION OF THE INVENTION

The "battery anti-theft bench" consists of the following main elements:
A. The main structure is a metallic container whose measurements are adapted to the shape and dimensions of the battery or set of batteries to be protected. On the one hand, its function is to be fixed to a metal cabinet by means of electric welding or horizontally by means of lag screws arranged, in both cases, at a distance from the edge of the assembly, reducing the possibility, once it contains the batteries, of any cutting with a radial battery. It also serves to secure the set of batteries, providing each one with the corresponding unitary support to remain fixed on said structure, and for that purpose, includes two or three through holes and tube guides through which the fixing screw is inserted between the two elements.
B. A battery unit support to which the battery is joined together, in metal compartments of an angular section and dimensions adapted so that the said angular profile serves as the seat of the battery by its base. Below this seat of angular section it contains a horizontal pipe arranged longitudinally and designed so that it is mounted on the main structure in one of the free positions. It houses the corresponding fixing screw of the unit battery support to the main structure, in turn passing through the interior of two or three holes arranged in the main holding structure so that the fixing of each unit battery support on the described ensemble is achieved.
C. Fixing screws of the unit battery support to the main structure as a metal rod with a diameter adapted to the cylinder of each unit battery support in which it is housed. The length is adapted to the main structure and threaded sections that start from both ends and it contains a safety head that requires the use of a specific key to carry out the opening or tightening of the assembly. Once mounted on the assembly, it remains at a distance from the longitudinal ends of the unit supports of the batteries (with the batteries arranged above), preventing external access intended to carry out any cutting with a radial machine or drill.
D. A metallic closure as a front cover that prevents access to the screws fastening the battery support unit to the main structure. It is also provided with two additional security screws in order to carry out the fixing of the metal closure directly onto the bench.

From the described set, the installation of the "battery anti-theft bench" has been undertaken taking into account the following sequence:
1. Attachment by gluing each battery to its unit battery holder using quick drying chemical resins so that after thirty minutes both pieces are fully supported throughout their lifetime.
2. Placement of the frame on a metal cabinet by means of electric welding or on the floor itself making use of lag screws.
3. Placement of each unit battery bracket, joined together to the battery itself, on the free positions in order to fully occupy the whole of the bench.
4. Placement of the corresponding fixing screw to the main structure associated with each unit battery holder using the corresponding specific key associated with the safety head of each screw.
5. Placement of the metal closure using the corresponding additional security keys.
6. Assembly of the additional cylinder in case the client has requested it.

The removal of one or several batteries for maintenance or replacement is undertaken independently on any of those that are part of the set of batteries installed using the following sequence:
1. Dismantle the cylinder, if it exists.
2. Dismantle the metal closure using the corresponding safety keys.
3. Remove the fixing bolts of the battery unit support to the main structure using the corresponding specific key associated with the safety head of each screw.

### DESCRIPTION OF THE DRAWINGS

To complement the description and help give a better understanding of the characteristics of the invention a set of drawings is attached as an integral part of said description.
Figure 1. Shows a main perspective view of the main structure of the "Battery anti-theft bench".
Figure 2. Shows a main perspective view of the unit support of the "Battery anti-theft bench" battery.
Figure 3. Shows a main section view of the unit support of the "Battery anti-theft bench" battery.
Figure 4 Shows a main perspective view of the battery unit support with the battery located in the fixing position.
Figure 5. Shows a main perspective view of the unit battery support assembly with the same glued in the fastening position and mounted on the main structure with fixing screws of the battery unitary support to the main structure introduced.
Figure 6. Shows a main sectional view of the detail of the unitary battery holder fixing with the main structure without fixing screw inside it.
Figure 7. Shows a main elevation view of fixing screws of the battery support unit to the main structure.
Figure 8. Shows a main sectional view of the detail of the unit battery support fixing with the main structure with fixing screw inside.
Figure 9. Shows a main perspective view of the front metal closure of the "battery anti-theft bench".
Figure 10. Shows a main perspective view of the "Battery anti-theft battery" assembly fully assembled once the front metal closure has been installed.

In the aforementioned figures the following constituent elements can be highlighted:
1. Fastening holes for the main structure to the ground.
2. Through holes through beams of the main structure.
3. Tube guides of the fixing screw of the main structure to the battery unit support.
4. Through hole in unit battery support seat.
5. Screw tube guide in unit battery holder.
6. Battery.
7. Battery unit support.
8. Fixing screw of main structure to the unit battery support.
9. Metal battery closure.
10. Safety screws with metal battery closing.
11. Grated areas of fixing screw of main structure to unit battery support.
12. Main structure.

### EXAMPLE OF PREFERRED EMBODIMENT SUPPORTED IN FIGURES

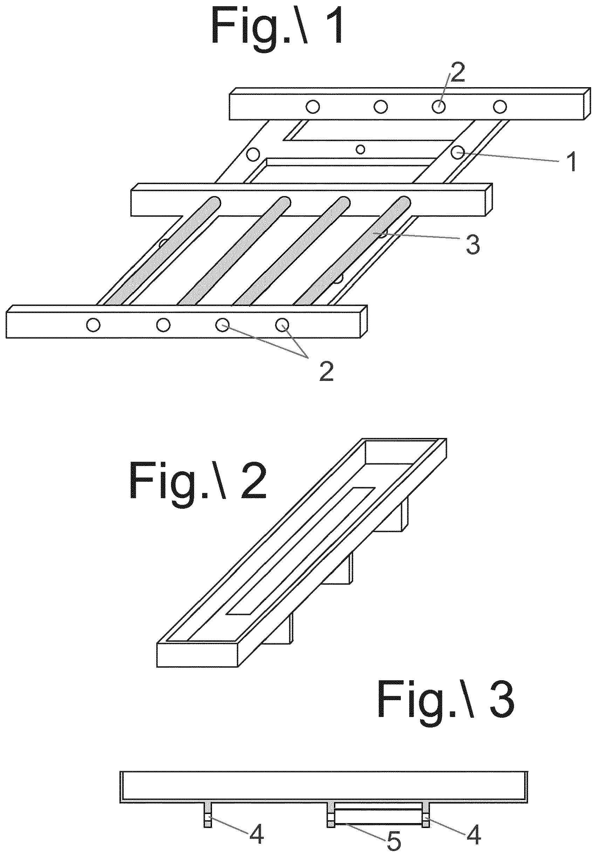

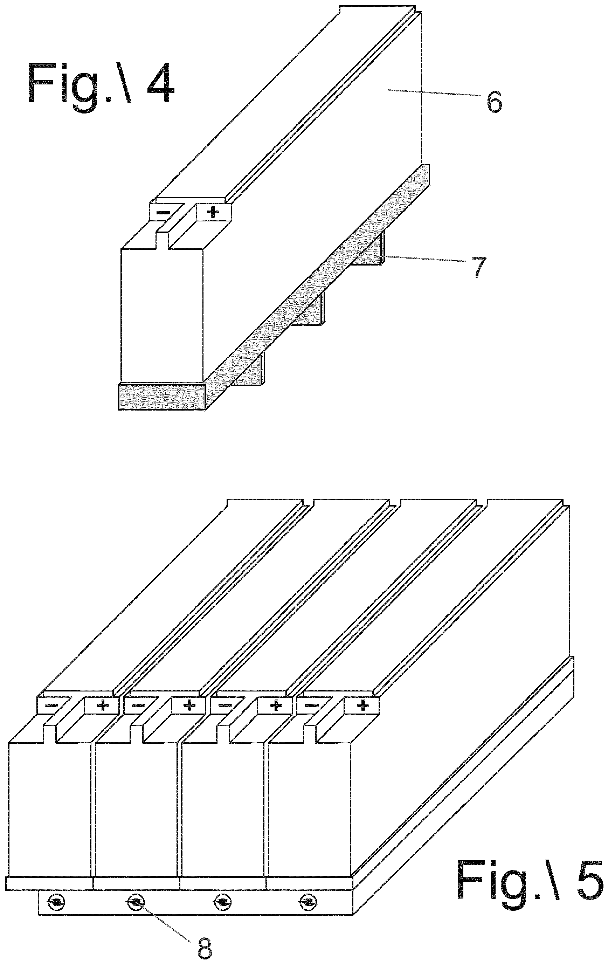

In view of figures 1-10, it can be seen, by way of an example showing a preferred use of the "battery anti-theft bench", how this can be used in a conventional carbon steel grid to contain four batteries. This allows the enclosure of, for example, Power Safe 12V155F (Enersys) type batteries commonly used in mobile telephone stations, making use of a main structure like the one in figure 1. In this case fixed by screws to a concrete floor by means of drilling and fixing the main structure to the floor (1). Likewise, in the aforementioned main structure of figure 1, the holes (2) are also seen through the beams of the main structure and the tube guides (3) for fixing the screws of the main structure to the unit support of the batteries. Continuing with the description in Figure 2-8, it can be seen how the unit support of each battery has been made. It has been designed to receive the battery on its base, while in a longitudinal horizontal plane. It contains three through holes (4) and a tube guide (5) for fixing the screw (8) to the main structure (12).

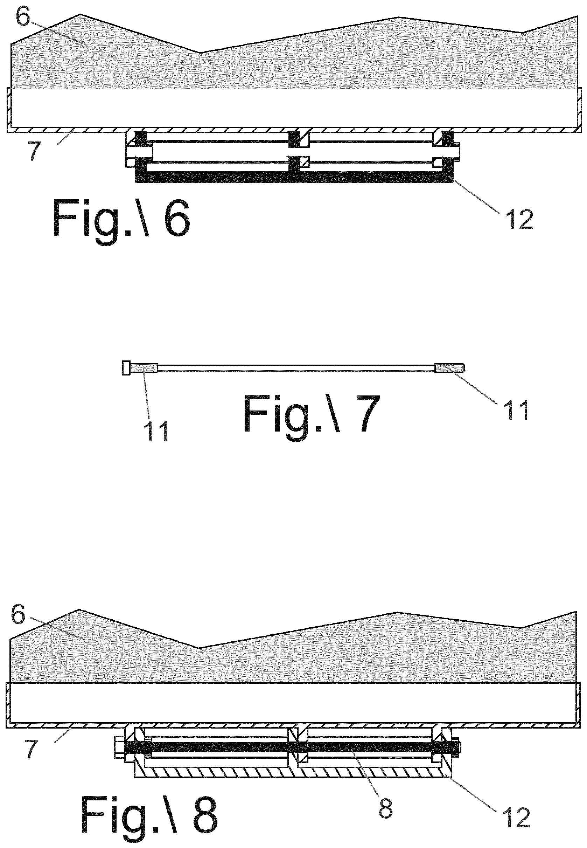

It is important to highlight that the fixing screw of figure 7 is the basis on which the connection between each battery support unit (7) and the main structure (12) itself is carried out. There are respective threaded areas (11) and to tighten the assembly they must match the corresponding female thread on the main structure (12) as shown in figure 6 and figure 8. In the example, an M12 screw with 4 centimeters of thread was used for each end.

Likewise, in figure 8 it is seen how access to the head of the screw (8) once the battery (6) is installed is 12 centimeters from the end of the unit support of the battery (7) preventing access for its theft from the outside.

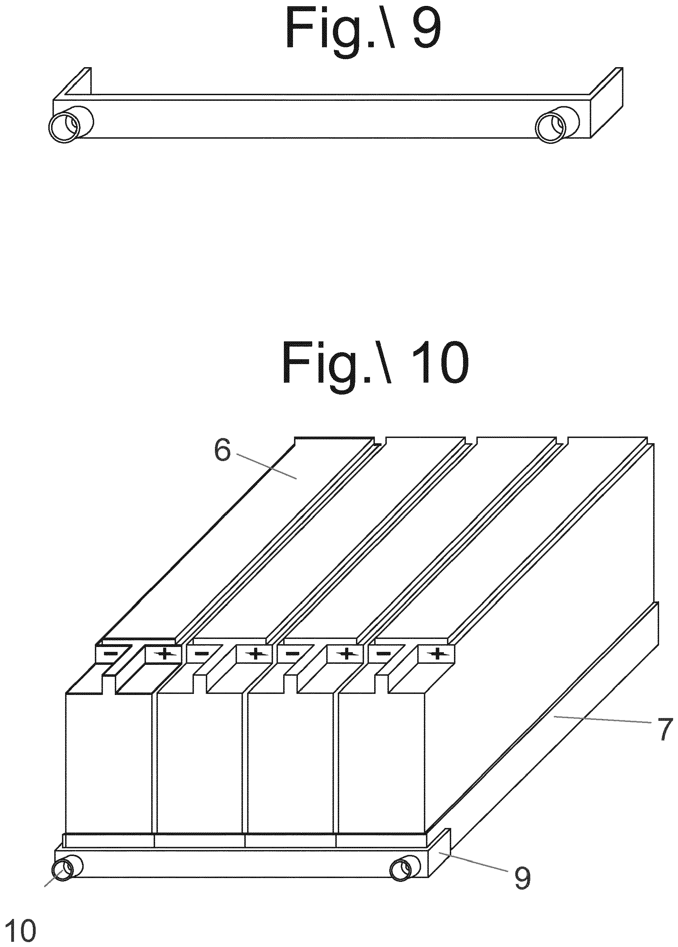

Finally, in figures 9-10, additional security is provided by making use of the metallic battery closure (9) provided using the corresponding security screws (10).

It is also important to demonstrate as shown in Figure 10, that once the assembly is fully installed, it is not possible to access the metal profiles that make up the main structure (12) from the outside using a cutting machine or similar tool.

Additionally, the security screw at the front (10) can be provided with additional security by means of a cylindrical lock or cylindrical cylinder in the case of telephone base station installations, or by electronic lock (of the "Locken" type) so that even authorized users have to indicate that they have permission to access the batteries. Likewise, it is also possible to install a set of sensors, which would trigger an optical or acoustic alarm or send an SMS to a server, informing the interested party that closure has not been correct.

Once installed, following the procedure outlined, the batteries would form a single block impossible to remove without the corresponding security keys and proof against the usual means of theft.

It is not considered necessary to make this description any more extensive. Any expert in the field will be able to understand the scope of the invention and the advantages derived therefrom. By dispensing with the metal closure, the dimensions and forms of the described set are adapted to the size of each battery and the desired number of them. The materials chosen for the manufacture of the different elements, thickness, design, screws or elements of fixing between them, etc., will be susceptible of modification as long as this does not alter the essence of the invention.

The terms used in this report should be taken in a broad and non-limiting sense.

## Claims

1. The Battery Anti-Theft Bench is **characterized by** the following main elements:
A. The main structure is a metallic container whose measurements are adapted to the shape and dimensions of the battery or set of batteries to be protected, and its function is, on the one hand, to be the element on which the metalic cabinet is fixed by electric welding or on the ground itself with lag screws arranged, in both cases, at a distance from the edge of the assembly. This helps reduce the possibility of any cutting with a sharp rotating tool. It also serves to secure the set of batteries, providing each one with the corresponding unitary support to remain fixed on said structure, and for that purpose, includes two or three through holes and tube guides through which the fixing screw is inserted between the two elements.
B. A battery unit support to which the battery is joined together, in metal compartments of an angular section and dimensions adapted so that the said angular profile serves as the seat of the battery by its base. Below this seat of angular section, it contains a horizontal pipe arranged longitudinally and designed so that it is mounted on the main structure in one of the free positions. It lodges the corresponding fixing screw of the unit battery support to the main structure, in turn through the interior of two or three holes arranged in the main holding structure so that the fixing of each unit battery support on the described set is achieved
C. Fixing screws of the unit battery support to the main structure as a metal rod with a diameter adapted to the cylinder of each unit battery support in which it is housed. The length is adapted to the main structure and threaded sections that start from both ends and it contains a safety head that requires the use of a specific key to carry out the opening or tightening of the assembly. Once mounted on the assembly, at a distance from the longitudinal ends of the unit supports of the batteries (with the batteries arranged above) it remains and prevents external access that tries to carry out any cutting with a radial machine or drill.
D. A metallic closure as a front cover that prevents access to the screws fastening the battery support unit to the main structure. It is also provided with two additional security screws in order to carry out the fixing of the metal closure directly onto the bench.

2. The Battery Anti-Theft Bench, according to claim 1, is **characterized by** the installation procedure using the following sequence:
A. Attachment by gluing each battery to its unit battery holder using quick-drying chemical resins so that after thirty minutes both pieces are fully supported throughout their lifetime.
B. Placement of the frame on a metal cabinet by means of electric welding or on the floor itself making use of lag screws.
C. Placement of each unit battery bracket, joined together to the battery itself, on the free positions in order to fully occupy the whole of the bench.
D. Placement of the corresponding fixing screw on the main structure associated with each unit battery holder using the corresponding specific key associated with the safety head of each screw.
E. Placement of the metal closure using the corresponding additional security keys.

3. The Battery Anti-Theft Bench, according to claims 1 and 2, is **characterized by** a procedure allowing the removal of one or more batteries for maintenance or replacement using the following sequence:
A. Dismantle the metal closure using the corresponding safety keys.
B. Remove the fixing bolts of the battery unit support to the main structure using the corresponding specific key associated with the safety head of each screw.
